# EUROPEAN PATENT SPECIFICATION

(11) **EP 4 383 410 B1**
(45) Date of publication and mention of the grant of the patent: **26.08.2026**
(21) Application number: 21960386.7
(22) Date of filing: 29.10.2021
(51) Int. Cl.: H01M 50/103

(54) **BATTERY, ELECTRIC DEVICE, AND METHOD AND DEVICE FOR PREPARING BATTERY**
BATTERIE, ELEKTRISCHE VORRICHTUNG SOWIE VERFAHREN UND VORRICHTUNG ZUR HERSTELLUNG DER BATTERIE
BATTERIE, DISPOSITIF ÉLECTRIQUE, ET PROCÉDÉ ET DISPOSITIF DE PRÉPARATION DE BATTERIE

(30) Priority: 12.10.2021 CN 202111188271
(43) Date of publication of application: 12.06.2024
(73) Proprietor: Contemporary Amperex Technology (Hong Kong) Limited, Central, Central And Western District (HK)
(72) Inventor: XU, Hu, Ningde, Fujian 352000 (CN); NIU, Shaojun, Ningde, Fujian 352000 (CN); JIN, Haizu, Ningde, Fujian 352000 (CN); LI, Xing, Ningde, Fujian 352000 (CN)
(74) Representative: Gong, Jinping
(86) International application number: PCT/CN2021/127530
(87) International publication number: WO 2023/060659

(56) References cited:
- CN-A- 107 851 868
- CN-U- 206 849 882
- CN-U- 213 752 931
- FR-A1- 2 961 442
- JP-A- 2008 198 453
- JP-A- 2018 116 813
- JP-A- 2019 067 763

## Description

This application claims priority to Chinese Patent Application No. 202111188271.0, filed with the China National Intellectual Property Administration on October 12, 2021 and entitled "BATTERY CELL, BATTERY, AND ELECTRIC APPARATUS".

### FIELD

Embodiments of this application relate to the field of batteries, and more specifically, to a battery, an electric apparatus, and a method and an apparatus for manufacturing battery.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development.

Batteries are mounted in electric apparatuses, for example, electric vehicles. Movement of the electric vehicle causes some impact on the battery, and if the battery has weak stiffness and strength, such impact will have an adverse effect on performance of the battery and may cause safety problems. Therefore, how the stiffness and strength of batteries are enhanced is an urgent technical problem that needs to be solved in battery technology. FR 2 961 442 A1 discloses the preamble of claim 1.

### SUMMARY

This application provides a battery, an electric apparatus, a method for manufacturing battery, and an apparatus for manufacturing battery, so as to enhance stiffness and strength of the battery.

According to a first aspect, a battery is provided, including: a box; and a plurality of columns of battery cells accommodated in the box, where the battery cell is a polyhedral structure and includes a first wall and a second wall connected to each other, the first wall being a wall with a largest area of the battery cell and perpendicular to a first direction, the second wall being oblique to the first direction, and the first direction being parallel to the direction of gravity. Each column of battery cells in the plurality of columns of battery cells are stacked along the first direction, and in each column of battery cells, adjacent ones of the battery cells are attached to each other via the first wall. The plurality of columns of battery cells are arranged along a second direction perpendicular to the first direction, and two adjacent columns of battery cells are attached to each other via the second wall. A first spacer can be provided between the plurality of columns of battery cells. The first spacer has walls oblique to the first direction so as to be attached to the second walls of two columns of battery cells adjacent to the first spacer. The first spacer is at least one of the following structures: a cross beam, a thermal management component, and a structural adhesive.

According to technical solutions in the embodiments of this application, in the box of the battery, in the plurality of columns of battery cells arranged along the second direction, the second walls of two adjacent columns of battery cells attached to each other are oblique to the first direction, that is, the second walls are oblique to the direction of gravity. Therefore, interaction forces parallel to the direction of gravity are formed between adjacent second walls such that at least one oblique second wall of each battery cell is held down by an oblique second wall of a battery cell adj acent thereto. The interaction forces formed between the adjacent battery cells make two adjacent battery cells bind and constrain each other, thus enhancing overall stiffness and strength of the battery and reducing safety risks caused by vibration and impact on the battery in use. In addition, each column of battery cells are stacked along the first direction, and in each column of battery cells, adjacent battery cells are attached to each other via adjacent first walls. The first wall is a wall with a largest area of the battery cell and perpendicular to the first direction, or disposed in the horizontal direction, so that the first wall with the largest area can be used for implementing stable disposition of each column of battery cells on the horizontal plane.

According to the technical solution in these implementations, the first spacer is provided between the plurality of columns of battery cells. On one hand, the overall stiffness and strength of the battery can be enhanced, improving overall impact resistance of the battery. On the other hand, the first spacer can also support the second walls of the battery cells, avoiding continuous accumulation of stress of the plurality of columns of battery cells in an arrangement direction thereof in case of swelling of the battery cells, enhancing strength and stiffness of the plurality of columns of battery cells in the arrangement direction thereof, and improving overall stability and safety of the battery. On the third hand, the first spacer can further block heat transfer. When a battery cell located on one side of the first spacer experiences thermal runaway, a large amount of heat generated by this battery cell is blocked by the first spacer to some extent, thereby preventing the heat from being transferred to a battery cell located on the other side of the first spacer, guaranteeing normal operation of the battery cell located on the other side of the first spacer, and improving the overall safety of the battery.

According to the invention, the battery cell includes two first walls parallel to each other and two second walls parallel to each other, and the battery cell has a parallelogram cross section on a plane perpendicular to the first walls and the second walls.

According to the technical solution of the invention, the battery cell may include two second walls oblique to the first direction and parallel to each other. On one hand, the battery cell can be attached to adjacent left and right two battery cells via the two oblique second walls, thus further implementing interconnection of a plurality of battery cells. On the other hand, the battery cell has a relatively regular and symmetrical structure, facilitating manufacture and mounting of the battery cell.

In some possible implementations, in each column of battery cells, a plurality of second walls, on a same side, of a plurality of battery cells are on a same plane.

According to the technical solution in these implementations, in each column of battery cells, a plurality of second walls, on a same side, of a plurality of battery cells can be on a same plane, that is, two oblique walls parallel to each other can be formed on two sides of each column of battery cells, which can more easily implement mounting and connection between the plurality of columns of battery cells, thus simplifying a manner of mounting the plurality of battery cells in the box and improving the production efficiency of the battery.

In some possible implementations, the battery cell includes two first walls parallel to each other and two second walls unparallel to each other, and the battery cell has a trapezoid cross section on the plane perpendicular to the first walls and the second walls.

In some possible implementations, in each column of battery cells, a plurality of second walls, on one side, of a plurality of battery cells are on a same plane.

According to the technical solution in these implementations, in each column of battery cells of the battery, a plurality of second walls, on one side, of a plurality of battery cells can be on a same plane. Therefore, when two adjacent columns of battery cells are spliced with each other, two oblique walls parallel to each other can be formed on two sides of the entire two columns of battery cells, which can also more easily implement connection between the plurality of columns of battery cells, thus improving the production efficiency of the battery.

In some possible implementations, the first wall and the second wall extend along a length direction of the battery cell, and the length direction of the battery cell is perpendicular to the first direction and the second direction.

According to the technical solution in these implementations, the first wall and the second wall extend along the length direction of the battery cell, which can make the first wall and the second wall have a longer length and thus have a larger area. For the first wall, it is perpendicular to the first direction, or perpendicular to the direction of gravity, and if the first wall has a larger area, when the battery cell is disposed on the horizontal plane via the first wall, the battery cell can have higher stability. For the second wall, if it has a larger area, the interaction forces between the second walls of adjacent battery cells can be increased, and more structural adhesives can be provided on the second wall, improving the stability of the battery cell.

In some possible implementations, each column of battery cells are stacked along a thickness direction of the battery cells, and the thickness direction of the battery cells is parallel to the first direction.

In some possible implementations, the battery cell further includes a third wall located at an end of the battery cell in the length direction and connected to the first wall and the second wall; and the battery cell further includes an electrode terminal disposed on the third wall.

According to the technical solution in these implementations, the electrode terminal of the battery cell is disposed on the third wall located at the end of the battery cell in the length direction, without affecting attachment of the first wall and the second wall of the battery cell to other components, where the first wall and the second wall extend along the length direction of the battery cell and have a larger area. This ensures higher stability of the battery cell. In addition, the third wall may have a smaller area, so that length of a busbar for electrical connection between adjacent battery cells can be shortened, thereby facilitating disposition and mounting of the busbar in the box of the battery.

In some possible implementations, the battery cell further includes a pressure relief mechanism disposed on the third wall or the first wall.

According to the technical solution in these implementations, the pressure relief mechanism is disposed on the third wall or the first wall other than the second wall in the battery cell, without affecting attachment of the second wall to other components either, thereby ensuring higher stability of the battery cell.

In some possible implementations, the battery includes N columns of battery cells, and each column of battery cells in the N columns of battery cells includes M battery cells, where M and N are positive integers greater than 1, and N is greater than or equal to M.

According to the technical solution in these implementations, in the battery, fewer battery cells are stacked along the first direction, and more battery cells are arranged along the second direction. On one hand, in the gravity direction parallel to the first direction, the overall size of the battery is smaller, and in the horizontal direction parallel to the second direction, the overall size of the battery is larger, facilitating stable mounting of the battery in an electric apparatus. On the other hand, each column of battery cells are stacked along the first direction via the first walls having a larger area, and two adjacent columns of battery cells are connected to each other in the second direction via the second walls having a smaller area, so that most of the heat generated by the battery cells is transferred among each column of battery cells through the first walls having a larger area, while less amount of the heat is transferred to other columns of battery cells through the second walls. Therefore, in the case that fewer battery cells are present in each column of battery cells, if a battery cell in the battery experiences thermal runaway, the battery cell only affects other battery cells in the column in which the battery cell is located, and has less influence on battery cells in other columns, thereby improving overall safety performance of the battery.

In some possible implementations, the plurality of columns of battery cells are sequentially attached to each other via the second walls to form an entirety.

According to the technical solution in these implementations, the plurality of columns of battery cells are sequentially attached to each other to form an entirety and be mounted in the box, and no other spacer is provided between the plurality of battery cells, so that energy density and overall quality of the battery can be improved, optimizing overall performance of the battery.

In some possible implementations, the first spacer has a parallelogram or trapezoid cross section on the plane perpendicular to the first walls and the second walls.

According to the technical solution in these implementations, in the case that the first spacer has a trapezoid cross section on the plane perpendicular to the first walls and the second walls, when a plurality of battery cells swell, stress generated in an arrangement direction (that is, the second direction) of a group of battery cells located on one side of the first spacer can partially offset or be partially offset by stress generated in an arrangement direction (the second direction) of a group of battery cells located on the other side of the first spacer, thereby further enhancing the overall stiffness and strength of the battery, improving the stability of the battery, and guaranteeing the safety performance of the battery.

In some possible implementations, the first spacer is provided in a quantity of less than or equal to 5.

According to the technical solution in these implementations, controlling the quantity of the first spacer in the battery to be within 5 can balance the overall strength and energy density of the battery.

In some possible implementations, the plurality of columns of battery cells are arranged along the second direction to form a row of battery cells; and the battery further includes an end plate disposed on at least one end of the row of battery cells in the second direction, where the end plate has a wall oblique to the first direction, and the oblique wall is configured to be attached to the second wall of the battery cell.

According to the technical solution in these implementations, the end plate can fasten and constrain the row of battery cells in the second direction. In addition, the end plate can also support the second walls located on two sides of at least one row of battery cells and having a larger area, and bear stress on the second walls caused by swelling of the battery cells, so as to improve stability of the battery cells in the box and the overall strength and stiffness of the battery.

In some possible implementations, thickness of the end plate at an end facing the direction of gravity is greater than thickness of the end plate at an end facing away from the direction of gravity.

According to the technical solution in these implementations, the end plate has a larger thickness at the end facing the direction of gravity, which can ensure that the battery has higher stiffness, strength, and stability at an end facing the direction of gravity. When the battery is mounted at a chassis of a vehicle, the battery can better resist external impact such as flying stones on the bottom of the vehicle, thus improving mounting stability of the battery in the vehicle and guaranteeing operation performance of the battery.

In some possible implementations, the plurality of columns of battery cells are arranged along the second direction to form a row of battery cells, and the battery includes a plurality of rows of battery cells; and a second spacer is provided between two adjacent rows of battery cells in the plurality of rows of battery cells, and the second spacer is at least one of the following structures: a cross beam, a thermal management component, and a structural adhesive.

According to the technical solution in these implementations, the second spacer is provided between two adjacent rows of battery cells, which can enhance the overall stiffness and strength of the battery, thereby improving overall impact resistance of the battery. In addition, if the second spacer is a thermal management component, for example, a cooling component such as a cooling plate, this thermal management component has a thermal management function for the battery cells in addition to having enough stiffness and strength, and can regulate the temperatures of the battery cells, further guaranteeing working performance and safety performance of the battery.

In some possible implementations, the battery further includes thermal management components corresponding to walls other than the second walls of the plurality of columns of battery cells for thermal management of the plurality of columns of battery cells.

In some possible implementations, the thermal management component is disposed between two adjacent battery cells in each column of battery cells.

According to the technical solution in these implementations, the thermal management component is disposed between two adjacent battery cells in each column of battery cells to correspond to the first walls of the two adjacent battery cells, facilitating better temperature management.

According to a second aspect, an electric apparatus is provided, including the battery according to any one of the first aspect or the possible implementations of the first aspect, where the battery is configured to supply electric energy.

According to a third aspect, a method for manufacturing battery is provided, including: providing a box; providing a plurality of columns of battery cells, where the battery cell is a polyhedral structure and includes a first wall and a second wall connected to each other, the first wall being a wall with a largest area of the battery cell and perpendicular to a first direction, the second wall being oblique to the first direction, and the first direction being parallel to the direction of gravity; where each column of battery cells in the plurality of columns of battery cells are stacked along the first direction, and in each column of battery cells, adjacent ones of the battery cells are attached to each other via the first wall; and the plurality of columns of battery cells are arranged along a second direction perpendicular to the first direction, and two adjacent columns of battery cells are attached to each other via the second wall; and accommodating the plurality of columns of battery cells in the box.

According to a fourth aspect, an apparatus for manufacturing battery is provided, including: a provision module, configured to: provide a box; and provide a plurality of columns of battery cells, where the battery cell is a polyhedral structure and includes a first wall and a second wall connected to each other, the first wall being a wall with a largest area of the battery cell and perpendicular to a first direction, the second wall being oblique to the first direction, and the first direction being parallel to the direction of gravity; where each column of battery cells in the plurality of columns of battery cells are stacked along the first direction, and in each column of battery cells, adjacent ones of the battery cells are attached to each other via the first wall; and the plurality of columns of battery cells are arranged along a second direction perpendicular to the first direction, and two adjacent columns of battery cells are attached to each other via the second wall; and a mounting module, configured to accommodate the plurality of columns of battery cells in the box.

According to technical solutions in the embodiments of this application, in the box of the battery, in the plurality of columns of battery cells arranged along the second direction, the second walls of two adjacent columns of battery cells attached to each other are oblique to the first direction, that is, the second walls are oblique to the direction of gravity. Therefore, interaction forces parallel to the direction of gravity are formed between adjacent second walls such that at least one oblique second wall of each battery cell is held down by an oblique second wall of a battery cell adj acent thereto. The interaction forces formed between the adjacent battery cells make two adjacent battery cells bind and constrain each other, thus enhancing overall stiffness and strength of the battery and reducing safety risks caused by vibration and impact on the battery in use. In addition, each column of battery cells are stacked along the first direction, and in each column of battery cells, adjacent battery cells are attached to each other via adjacent first walls. The first wall is a wall with a largest area of the battery cell and perpendicular to the first direction, or disposed in the horizontal direction, so that the first wall with the largest area can be used for implementing stable disposition of each column of battery cells on the horizontal plane.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is a schematic structural diagram of a battery according to an embodiment of this application;
FIG. 5 shows schematic structures of two types of battery cells according to an embodiment of this application;
FIG. 6 is a schematic front and side view of a battery cell according to an embodiment of this application;
FIG. 7 shows schematic structures of two types of battery cells according to an embodiment of this application;
FIG. 8 is a schematic top and cross-sectional view of a battery according to an embodiment of this application;
FIG. 9 is a schematic top and cross-sectional view of a battery according to an embodiment of this application;
FIG. 10 shows schematic cross-sectional views of two types of batteries according to an embodiment of this application;
FIG. 11 is a schematic top and cross-sectional view of a battery according to an embodiment of this application;
FIG. 12 shows schematic cross-sectional views of two types of batteries according to an embodiment of this application;
FIG. 13 is a schematic top and cross-sectional view of a battery according to an embodiment of this application;
FIG. 14 is a schematic top and cross-sectional view of a battery according to an embodiment of this application;
FIG. 15 is a schematic cross-sectional view of a battery according to an embodiment of this application;
FIG. 16 is a schematic flowchart of a method for manufacturing battery according to an embodiment of this application; and
FIG. 17 is a schematic block diagram of an apparatus for manufacturing battery according to an embodiment of this application.

The accompanying drawings are not drawn to scale.

### DESCRIPTION OF EMBODIMENTS

The following further describes implementations of this application in detail with reference to accompanying drawings and embodiments. The detailed description of embodiments and the accompanying drawings are intended to illustrate the principle of this application, rather than to limit the scope of this application, meaning that this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", and "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all refer to the orientations as shown in the drawings, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

The battery in this application is a single physical module that includes one or more battery cells for providing electric energy. For example, the battery mentioned in this application may include a battery module, a battery pack, or the like. A battery typically includes a box configured to enclose one or more battery cells. The box can prevent liquids or other foreign matter from affecting charging or discharging of the battery cell.

Optionally, the battery cell may include a lithium ion secondary battery, a lithium ion primary battery, a lithium-sulfur battery, a sodium/lithium-ion battery, a sodium ion battery, a magnesium ion battery, or the like. This is not limited in the embodiments of this application. In some implementations, the battery cell may also be referred to as a cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of current collector uncoated with the positive electrode active substance layer protrudes out of the part of current collector coated with the positive electrode active substance layer and serves as a positive tab. A lithium-ion battery is used as an example, for which the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of current collector uncoated with the negative electrode active substance layer protrudes out of the part of current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (Polypropylene, PP), polyethylene (Polyethylene, PE), or the like. In addition, the electrode assembly may be a winding structure or a laminated structure, but the embodiments of this application are not limited thereto.

For the development of battery technology, many design factors need to be considered, for example, performance parameters such as energy density, cycle life, discharge capacity, and charge and discharge rate, as well as stability of the battery mounted in an electric apparatus, so as to improve safety of the battery in the electric apparatus.

In some battery packaging technologies, for conventional prismatic battery cells, for example, blade battery cells, larger surfaces of the battery cell are fixedly connected to each other by using a structural adhesive, which makes the entire battery have enough strength and stiffness to resist external impact. However, in this case, an applying area of the structural adhesive between the battery cells is limited, and there is no interaction force between the battery cells. This affects mounting stability of the battery cells in the box and leads to limited overall strength and stiffness of the packaged battery, thus bringing some potential safety hazards.

In view of this, this application provides a technical solution to design the battery cell as a battery cell being a polyhedral structure different from the conventional prismatic battery cell. The battery cell being the polyhedral structure includes a first wall and a second wall connected to each other, where the first wall is a wall with a largest area of the battery cell and perpendicular to the direction of gravity, and the second wall is oblique to the direction of gravity. A battery may include a plurality of columns of battery cells, where each column of battery cells in the plurality of columns of battery cells are stacked along the direction of gravity, and in each column of battery cells, adjacent battery cells are attached to each other via the first wall; and the plurality of columns of battery cells are arranged along the horizontal direction perpendicular to the direction of gravity, and two adjacent columns of battery cells are attached to each other via the second wall, so as to form interaction forces parallel to the direction of gravity between adjacent second walls. Therefore, at least one second wall of each battery cell in each column of battery cells is pressed by an oblique second wall of a battery cell adjacent thereto, which can make each battery cell bound by the battery cell adjacent thereto. Interaction forces are formed between the battery cells, so that the battery cells constrain each other, which can enhance the overall stiffness and strength of the battery and reduce safety risks caused by vibration and impact on the battery in use.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, spaceships, and the like.

It should be understood that the technical solutions described in the embodiments of this application are applicable to not only the apparatuses described above but also all apparatuses using batteries. However, for brevity of description, in the following embodiments, an electric vehicle is used as an example for description.

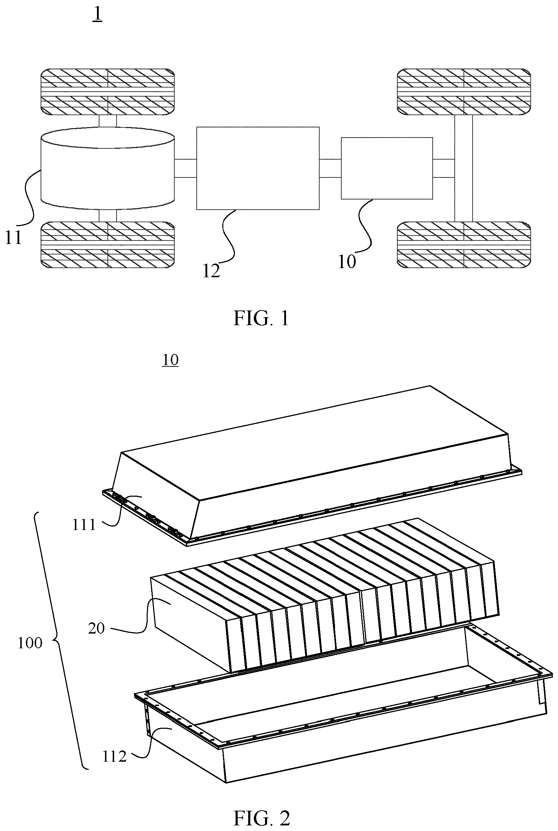

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 11, a controller 12, and a battery 10 may be provided inside the vehicle 1, where the controller 12 is configured to control the battery 10 to supply power to the motor 11. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be called a battery pack. Optionally, a plurality of battery cells may be connected in series, parallel, or series-parallel to form a battery module first, and then a plurality of battery modules are connected in series, parallel, or series-parallel to form a battery. In a word, the plurality of battery cells may be directly combined into a battery, or may first be combined into battery modules which are then combined into a battery.

For example, as shown in FIG. 2 that is a schematic structural diagram of a battery 10 according to an embodiment of this application, the battery 10 may include a plurality of battery cells 20. The battery 10 may further include a box 100 (or referred to as a cover body). Inside of the box 100 is a hollow structure. The plurality of battery cells 20 are accommodated in the box 100. As shown in FIG. 2, the box 100 may include two portions which are referred to herein as a first portion 111 and a second portion 112 respectively, and the first portion 111 and the second portion 112 are snap-fitted. Shapes of the first portion 111 and the second portion 112 may be determined according to a shape of the combined plurality of battery cells 20, and the first portion 111 and the second portion 112 each may have an opening. For example, the first portion 111 and the second portion 112 each may be a hollow cuboid and have only one face with an opening, where the opening of the first portion 111 is disposed opposite the opening of the second portion 112, and the first portion 111 and the second portion 112 are snap-fitted to form a box 100 with an enclosed chamber. The plurality of battery cells 20 are connected in parallel, series, or series-parallel and then placed into the box 100 formed after the first portion 111 and the second portion 112 are snap-fitted.

Optionally, in an implementation, a plurality of battery cells (cell) 20 may be first integrated into at least one battery module (module), and then the battery module is mounted in the box 100 of the battery 10 to form a battery pack (pack) in form. In this implementation, an auxiliary structural member such as a cross beam may be provided between the battery modules, which can improve mounting stability of the battery modules in the box 100.

Optionally, in a second implementation, a plurality of battery cells 20 may alternatively be directly connected to each other and mounted in the box 100 to form a battery pack in form, without an intermediate state of a battery module. An auxiliary structural member such as a cross beam may not be required in the box 100, thus reducing the mass of the battery 10 and increasing energy density of the battery 10. This implementation may also be called a battery cell to battery pack (cell to pack, CTP) mounting technology in the related technologies.

Optionally, in a third implementation, the box 100 may be integrated in an electric apparatus in which the battery 10 is located. In other words, the box 100 may be integrally formed with structural members in the electric apparatus. After being connected to each other, the plurality of battery cells 20 may be directly mounted in the box 100 of the electric apparatus. In an example, the box 100 may be integrated in a local region of a chassis of the foregoing vehicle 1, and after being connected to each other, the plurality of battery cells 20 may be directly mounted at the chassis of the vehicle 1. This implementation may also be called a battery cell to chassis (cell to chassis, CTC) mounting technology in the related technologies.

Optionally, the battery 10 may also include other structures. Details are not described herein. For example, the battery 10 may further include a busbar configured to implement electrical connection between the plurality of battery cells 20, such as a parallel connection, a series connection, or a series-parallel connection. Specifically, the busbar may implement the electrical connection between the battery cells 20 by connecting electrode terminals of the battery cells 20. Further, the busbar may be fastened on the electrode terminals of battery cells 20 by welding. Electric energy of the plurality of battery cells 20 may be further led out by a conductive mechanism that passes through the box 100. Optionally, the conductive mechanism may also belong to the busbar.

Depending on different power needs, the battery cells 20 may be provided in any quantity. The plurality of battery cells 20 may be connected in series, parallel, or series-parallel to implement large capacity or high power.

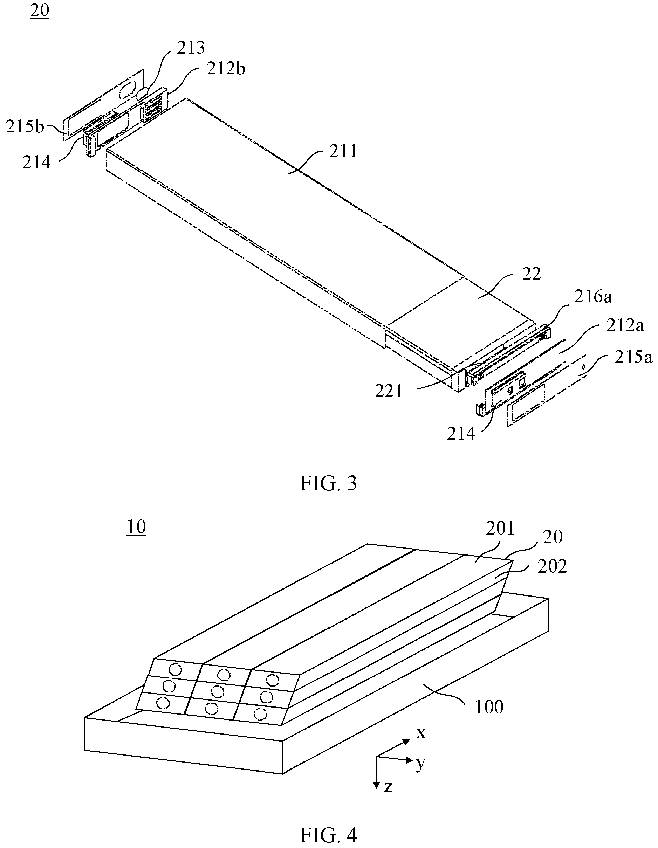

As shown in FIG. 3 that is a schematic structural diagram of a battery cell 20 according to an embodiment of this application. The battery cell 20 includes one or more electrode assemblies 22, a housing 211, a first cover plate 212a, and a second cover plate 212b. Walls of the housing 211, and the first cover plate 212a and the second cover plate 212b all are referred to as walls of the battery cell 20. The housing 211 is determined depending on a shape obtained through combining the one or more electrode assemblies 22. In an example, the housing 211 shown in FIG. 3 may be a hollow cuboid. At least one surface of the housing 211 has an opening for placing the one or more electrode assemblies 22 into the housing 211. For example, in the embodiment shown in FIG. 3, two opposite surfaces of the housing 211 each have an opening. The first cover plate 212a and the second cover plate 212b cover the openings in the two surfaces respectively and are connected to the housing 211 to form an enclosed cavity for accommodating the electrode assembly 22. The housing 211 is filled with an electrolyte, for example, a liquid electrolyte.

The battery cell 20 may further include two electrode terminals 214. Optionally, as shown in FIG. 3, the two electrode terminals 214 may be disposed on the first cover plate 212a and the second cover plate 212b respectively. Alternatively, in some other embodiments, the two electrode terminals 214 may be disposed on a same cover plate, for example, both disposed on the first cover plate 212a or the second cover plate 212b.

The first cover plate 212a and the second cover plate 212b are generally in a shape of a flat plate, and the two electrode terminals 214 may be fastened on flat surfaces of the first cover plate 212a and the second cover plate 212b respectively. The two electrode terminals 214 are a positive electrode terminal and a negative electrode terminal respectively. Each electrode terminal 214 is correspondingly provided with a connecting member or a current collecting member that is located between the first cover plate 212a and the electrode assembly 22 and between the second cover plate 212b and the electrode assembly 22 for electrically connecting the electrode assembly 22 and the electrode terminal 214.

Optionally, as shown in FIG. 3, the battery cell 20 may further include a first bracket 216a and a second bracket (not shown in the figure). The first bracket 216a is disposed between the electrode assembly 22 and the first cover plate 212a for fastening and connecting the first cover plate 212a. Correspondingly, the second bracket is disposed between the electrode assembly 22 and the second cover plate 212b for fastening and connecting the second cover plate 212b. Optionally, the foregoing connecting members connecting the electrode assembly 22 and the electrode terminal 214 may be located at the first bracket 216a and the second bracket respectively.

In addition, in the battery cell 20, each electrode assembly 22 has a first tab 221 and a second tab. The first tab 221 and the second tab have opposite polarities. For example, when the first tab 221 is a positive tab, the second tab is a negative tab. The first tabs 221 of the one or more electrode assemblies 22 are connected to one electrode terminal through one connecting member, and the second tabs of the one or more electrode assemblies 22 are connected to the other electrode terminal through the other connecting member. For example, as shown in FIG. 3, the electrode terminal 214 located on the first cover plate 212a may be connected to the first tab 221 via one connecting member located at the first bracket 216a. In addition, the other electrode terminal 214 located on the second cover plate 212b may be connected to the second tab via the other connecting member located at the second bracket.

In an example, a pressure relief mechanism 213 may further be provided on a wall of the battery cell 20. The pressure relief mechanism 213 is configured to be actuated to relieve internal pressure or temperature when the internal pressure or temperature of the battery cell 20 reaches a threshold.

Optionally, in another embodiment of this application, the pressure relief mechanism 213 and the electrode terminal 214 are disposed on a same wall of the battery cell 20. In an example, as shown in FIG. 3, the electrode terminal 214 and the pressure relief mechanism 213 may both be disposed on the second cover plate 212b of the battery cell 20.

The pressure relief mechanism 213 and the electrode terminal 214 being disposed on the same wall of the battery cell 20 can facilitate the processing and mounting of the pressure relief mechanism 213 and the electrode terminal 214, and is conducive to improving the production efficiency of the battery 10.

Certainly, in other embodiments of this application, the pressure relief mechanism 213 and the electrode terminal 214 may alternatively be disposed on different walls of the battery cell 20. For example, the two electrode terminals 214 in the battery 10 are respectively disposed on the first cover plate 212a and the second cover plate 212b of the battery cell 20, while the pressure relief mechanism 213 is disposed on a wall other than the first cover plate 212a and the second cover plate 212b in the battery 10.

The pressure relief mechanism 213 may be a part of the wall on which it is located, or may be a separate structure from the wall on which it is located, and may be fastened on the wall on which it is located by, for example, welding. For example, in the embodiment shown in FIG. 3, when the pressure relief mechanism 213 is a part of the second cover plate 212b, the pressure relief mechanism 213 may be formed by providing an indentation on the second cover plate 212b. Thickness of the second cover plate 212b corresponding to the indentation is less than thickness of regions of the pressure relief mechanism 213 other than the indentation. The weakest portion of the pressure relief mechanism 213 is at the indentation. When gas generated by the battery cell 20 is too much and the internal pressure of the housing 211 rises and reaches a threshold, or internal reactions of the battery cell 20 generate heat and cause internal temperature of the battery cell 20 to rise and reach a threshold, the pressure relief mechanism 213 may break at the indentation, causing the inside and the outside of the housing 211 to be communicated and the gas pressure and temperature to be discharged out through the breakage of the pressure relief mechanism 213, thereby preventing the battery cell 20 from exploding.

In addition, the pressure relief mechanism 213 may be various possible pressure relief mechanisms. This is not limited in this embodiment of this application. For example, the pressure relief mechanism 213 may be a temperature-sensitive pressure relief mechanism configured to melt when the internal temperature of the battery cell 20 provided with the pressure relief mechanism 213 reaches the threshold; and/or the pressure relief mechanism 213 may be a pressure-sensitive pressure relief mechanism configured to break when the internal gas pressure of the battery cell 20 provided with the pressure relief mechanism 213 reaches the threshold.

Optionally, as shown in FIG. 3, the battery cell 20 may further include a first protective layer 215a and a second protective layer 215b, where the first protective layer 215a and the second protective layer 215b respectively cover the first cover plate 212a and the second cover plate 212b to protect components on the two cover plates. Optionally, when the first cover plate 212a and the second cover plate 212b are metal cover plates, the first protective layer 215a and the second protective layer 215b may be insulation layers for insulating the metal cover plates from the outside. In addition, it can be learned from FIG. 3 that openings adapted to the electrode terminal 214 and the pressure relief mechanism 213 can be formed in the first protective layer 215a and the second protective layer 215b, so that the electrode terminal 214 is connected to the busbar through the opening, and the pressure relief mechanism 213 releases the internal gas pressure of the battery cell 20 through the opening.

FIG. 4 is a schematic structural diagram of a battery 10 according to an embodiment of this application.

As shown in FIG. 4, the battery 10 includes: a box 100; and a plurality of columns of battery cells 20 accommodated in the box 100, where the battery cell 20 is a polyhedral structure and includes a first wall 201 and a second wall 202 connected to each other, the first wall 201 being a wall with a largest area of the battery cell 20 and perpendicular to a first direction z, the second wall 202 being oblique to the first direction z, and the first direction z being parallel to the direction of gravity. Each column of battery cells 20 in the plurality of columns of battery cells 20 are stacked along the first direction z, and in each column of battery cells 20, adjacent ones of the battery cells 20 are attached to each other via the first wall 201. The plurality of columns of battery cells 20 are arranged along a second direction y perpendicular to the first direction z, and two adjacent columns of battery cells 20 are attached to each other via the second wall 202.

Optionally, in this embodiment of this application, the box 100 may be the box 100 in the embodiment shown in FIG. 2 above. To facilitate mounting of the box 100 in an electric apparatus, as an example rather than a limitation, the box 100 may be a hollow hexahedral structure.

Optionally, in this embodiment of this application, for an internal structure of the battery cell 20, reference may be made to the related descriptions in the embodiment shown in FIG. 3 above. To facilitate mounting of the battery cells 20 in the box 100 and improve mounting stability of the battery cells 20, the battery cell 20 may be a polyhedral structure. For example, the battery cell 20 may be a hexahedral structure including a first wall 201 and a second wall 202 connected to each other and unperpendicular to each other. Certainly, in other implementations, the battery cell 20 may alternatively be another type of polyhedral structure, so long as the battery cell 20 includes the first wall 201 and the second wall 202 connected to each other and unperpendicular to each other. The specific shape of the battery cell 20 is not limited in this embodiment of this application.

Optionally, for the battery cell 20, the first wall 201 and the second wall 202 may be the housing 211, the first cover plate 212a, or the second cover plate 212b of the battery cell 20 in the embodiment shown in FIG. 3 above.

Optionally, the first wall 201 and the second wall 202 may be connected to each other to form a wedge-shaped structure. Specifically, an included angle between the first wall 201 and the second wall 202 may be an acute angle so as to form a wedge-shaped structure with an acute vertex angle.

Or optionally, an included angle between the first wall 201 and the second wall 202 may alternatively be an obtuse angle, in which case it can also be understood as that a wedge-shaped structure with an obtuse vertex angle is formed between the first wall 201 and the second wall 202.

In addition, as shown in FIG. 4, the first direction z is parallel to the direction of gravity. In the box 100 of the battery 10, each column of battery cells 20 in the plurality of columns of battery cells 20 are stacked along the first direction z, or the direction of gravity. In each column of battery cells 20, adjacent ones of the battery cells 20 are attached to each other via the first wall 201. In addition, the second direction y is perpendicular to the first direction z, that is, the second direction y is perpendicular to the direction of gravity and parallel to the horizontal direction. In the box 100 of the battery 10, the plurality of columns of battery cells 20 may be arranged along the second direction y to form a row of battery cells 20, and two adjacent columns of battery cells 20 are attached to each other via the second wall 202, so as to form interaction forces in the first direction z between adjacent second walls 202.

According to technical solutions in this embodiment of this application, in the box 100 of the battery 10, in the plurality of columns of battery cells 20 arranged along the second direction y, the second walls 202 of two adjacent columns of battery cells 20 attached to each other are oblique to the first direction z, that is, the second walls 202 are oblique to the direction of gravity. Therefore, interaction forces parallel to the direction of gravity are formed between adjacent second walls 202 such that at least one oblique second wall 202 of each battery cell 20 is held down by an oblique second wall 202 of a battery cell 20 adjacent thereto. The interaction forces formed between the adjacent battery cells 20 make two adjacent battery cells 20 bind and constrain each other, thus enhancing overall stiffness and strength of the battery 10 and reducing safety risks caused by vibration and impact on the battery 10 in use. Further, a structural adhesive may be applied on the second wall 202, so that adjacent battery cells 20 can be connected to each other via the structural adhesive, which can further improve stability and overall stiffness and strength of the battery 10. In addition, as compared with a wall in the vertical direction, an area of the oblique second wall 202 is larger than that of the vertical wall. Therefore, the structural adhesive applied on the second wall 202 also has a larger area, which can further improve the stability and overall stiffness and strength of the battery 10.

In addition, in this embodiment of this application, each column of battery cells 20 are stacked along the first direction z, and in each column of battery cells 20, adjacent battery cells 20 are attached to each other via adjacent first walls 201. The first wall 201 is a wall with a largest area of the battery cell 20 and perpendicular to the first direction z, or disposed in the horizontal direction, so that the first wall 201 with the largest area can be used for implementing stable disposition of each column of battery cells 20 on the horizontal plane. In addition, a structural adhesive may further be applied on the first wall 201 with the largest area to implement relatively firm connection between adjacent battery cells 20 in each column of battery cells 20, thus improving stability of each column of battery cells 20.

Optionally, in some implementations, the battery cell 20 may include two first walls 201 parallel to each other and two second walls 202 parallel to each other, and the battery cell 20 has a parallelogram cross section on a plane perpendicular to the first walls 201 and the second walls 202. In these implementations, the battery cell 20 has a relatively regular and symmetrical structure, facilitating manufacture and mounting of the battery cell 20.

Optionally, in some other implementations, the battery cell 20 may include two first walls 201 parallel to each other and two second walls 202 unparallel to each other, the battery cell 20 has a trapezoid cross section on a plane perpendicular to the first walls 201 and the second walls 202, and the two second walls 202 unparallel to each other form waists of the trapezoid cross section.

In the foregoing two manners, the battery cell 20 may include two second walls 202 oblique to the first direction z, so that the battery cell 20 can be attached to adjacent left and right two battery cells 20 via the two oblique second walls 202, thus further implementing interconnection of a plurality of battery cells 20.

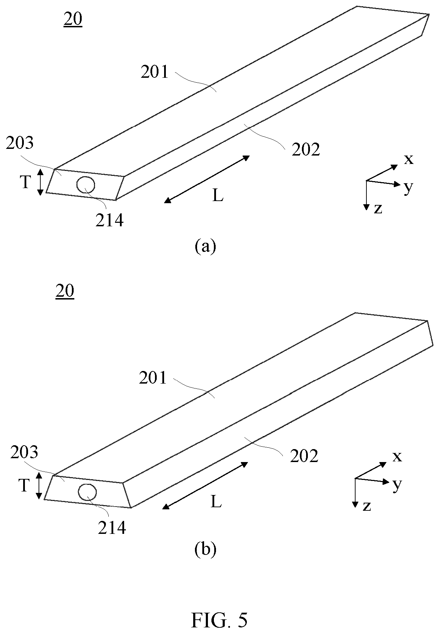

FIG. 5 is a schematic diagram of two types of battery cells 20 according to an embodiment of this application. (a) of FIG.5 may be an enlarged schematic diagram of the battery cell 20 in FIG.4.

Optionally, as shown in FIG. 5, the battery cell 20 is a hexahedral structure. The battery cell 20 may include two opposite first walls 201, two opposite second walls 202, and two opposite third walls 203 connected to the first walls 201 and the second walls 202.

Optionally, in the embodiment shown in FIG. 5, the third wall 203 may be perpendicular to the first wall 201 and the second wall 202, so that a shape of the third wall 203 is the same as that of a cross section of the battery cell 20 on a plane perpendicular to the first walls 201 and the second walls 202. That is, as shown in (a) of FIG. 5, the shape of the third wall 203 may be parallelogram, or as shown in (b) of FIG. 5, the shape of the third wall 203 may be trapezoid.

Certainly, the third wall 203 may alternatively be unperpendicular to the first wall 201 and the second wall 202. In this case, the shape of the third wall 203 may also be presented as parallelogram or trapezoid. Specific arrangement of the third wall 203 is not limited in this embodiment of this application.

Optionally, in the embodiment shown in FIG. 5, the first wall 201 and the second wall 202 both extend along a length direction L of the battery cell 20, and the length direction L of the battery cell 20 is perpendicular to the first direction z and the second direction y, that is, the length direction L of the battery cell 20 is parallel to a third direction x shown in FIG. 5.

It should be understood that in the three-dimensional space, the size of the polyhedral structure in its length direction is larger than sizes of the polyhedral structure in other directions, in other words, the direction with the largest size in the battery cell 20 of the polyhedral structure is its length direction.

According to these implementations, the first wall 201 and the second wall 202 extend along the length direction L of the battery cell 20, which can make the first wall 201 and the second wall 202 have a longer length and thus have a larger area. For the first wall 201, it is perpendicular to the first direction z, or perpendicular to the direction of gravity, and if the first wall 201 has a larger area, when the battery cell 20 is disposed on the horizontal plane via the first wall 201, the battery cell 20 can have higher stability. For the second wall 202, if it has a larger area, the interaction forces between the second walls 202 of adjacent battery cells 20 can be increased, and more structural adhesives can be provided on the second wall 202, improving the stability of the battery cell 20.

Optionally, in the embodiments shown in FIG. 4 and FIG. 5 above, the battery cell 20 may have the largest size in its length direction L, and the battery cell 20 may have the smallest size in its thickness direction T. Each column of battery cells 20 may be stacked along the thickness direction T of the battery cells 20, and the thickness direction T of the battery cells 20 is parallel to the first direction z.

The battery cells 20 shown in FIG. 4 and FIG. 5 may be called blade battery cells or blade cells. A plurality of blade battery cells can be more easily connected to each other in their thickness direction T and directly mounted as a whole in the box 100 of the battery 10.

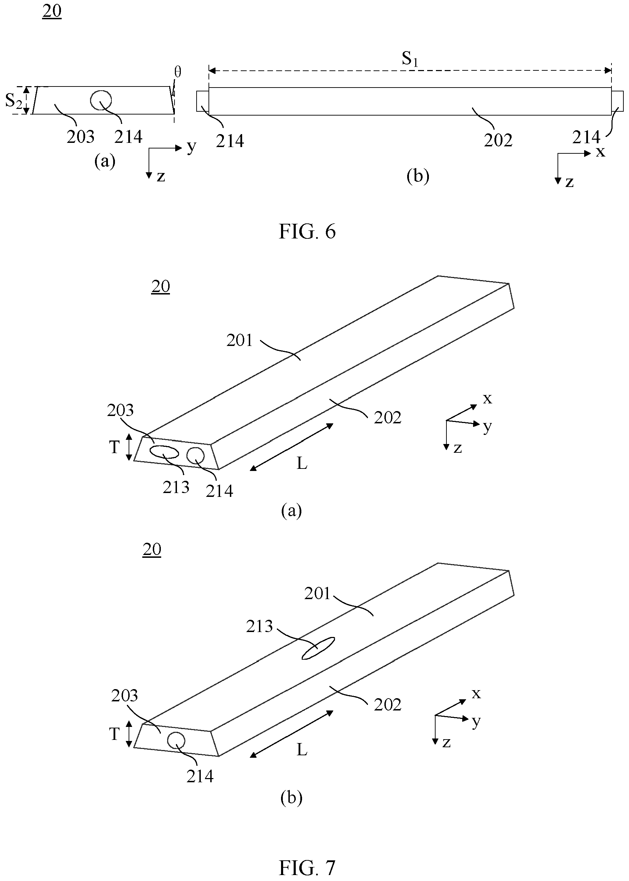

(a) of FIG. 6 is a front view of the battery cell 20 shown in (b) of FIG. 5, and (b) of FIG. 6 is a side view of the battery cell 20 shown in (b) of FIG. 5.

Optionally, as shown in FIG. 6, a first size of the battery cell 20 in its length direction L may be denoted as S1, and a second size of the battery cell 20 in its thickness direction T may be denoted as S2.

As an example rather than a limitation, the first size S1 may be in a range satisfying 100 mm ≤ S1 ≤ 1400 mm. Further, the first size S1 may be in a range satisfying 300 mm ≤ S1 ≤ 1200 mm.

As an example rather than a limitation, the second size S2 may be in a range satisfying 5 mm ≤ S2 ≤ 80 mm. Further, the second size S2 may be in a range satisfying 5 mm ≤ S2 ≤ 30 mm.

Optionally, as shown in FIG. 6, in the battery cell 20, an included angle between the second wall 202 and the first direction z may be denoted as θ.

As an example rather than a limitation, the included angle θ between the second wall 202 and the first direction z may be in a range satisfying 0° < θ ≤ 60°. Further, the included angle θ between the second wall 202 and the first direction z may be in a range satisfying 0° < θ ≤ 10°.

According to the technical solution in this embodiment of this application, controlling the included angle θ between the second wall 202 and the first direction z can balance space occupied by the battery cell 20 and the stability of the battery cell 20. With a smaller included angle θ, lateral space occupied by the battery cell 20 can be relatively reduced while ensuring mounting stability of the battery cell 20, thus increasing energy density of the battery 10.

Still referring to FIG. 5 and FIG. 6, in the battery cell 20, the third wall 203 may be correspondingly located at an end of the battery cell 20 in the length direction L and connected to the first wall 201 and the second wall 202.

Optionally, the battery cell 20 may further include an electrode terminal 214 disposed on the third wall 203. Specifically, the battery cell 20 may include two electrode terminals 214: a positive electrode terminal and a negative electrode terminal. In an example, as shown in FIG. 5 and FIG. 6, the two electrode terminals 214 may be respectively disposed at ends on two sides of the battery cell 20 in the length direction L, that is, the two electrode terminals 214 may be respectively disposed on the two third walls 203 of the battery cell 20. In another example, the two electrode terminals 214 may alternatively be disposed at an end on a same side of the battery cell 20 in the length direction L, that is, the two electrode terminals 214 may be disposed on a same third wall 203 of the battery cell 20.

According to the technical solution in this embodiment of this application, the electrode terminal 214 of the battery cell 20 is disposed on the third wall 203 of the battery cell 20 in the length direction L, without affecting attachment of the first wall 201 and the second wall 202 of the battery cell 20 to other components, where the first wall 201 and the second wall 202 extend along the length direction of the battery cell 20 and have a larger area. This ensures higher stability of the battery cell 20. In addition, based on actual design requirements, the electrode terminals 214 may be disposed on a same end surface or different end surfaces of the battery cell 20, so that the battery cell 20 can be flexibly used in various electrical environments.

FIG. 7 shows schematic structures of other two types of battery cells 20 according to an embodiment of this application.

As shown in FIG. 7, the battery cell 20 may further include a pressure relief mechanism 213, where the pressure relief mechanism 213 may be disposed on a wall other than the second wall 202 in the battery cell 20, that is, the first wall 201 or the third wall 203.

For example, in an implementation shown in (a) of FIG. 7, the pressure relief mechanism 213 is disposed on a third wall 203 located at an end of the battery cell 20 in the length direction L. Optionally, the pressure relief mechanism 213 may be disposed with the electrode terminal 214 on a same third wall 203, for example, the pressure relief mechanism 213 may be disposed on a side of one electrode terminal 214.

Alternatively, in an implementation shown in (b) of FIG. 7, the pressure relief mechanism 213 is disposed on the first wall 201 located at the top or bottom of the battery cell 20. In this implementation, each battery cell 20 is connected to another battery cell via the second wall 202, and the pressure relief mechanism 213 and the electrode terminal 214 are disposed on different walls of the battery cell 20 respectively, which can prevent the pressure relief mechanism 213 from affecting the electrode terminal 214 when releasing emissions inside the battery cell, thereby improving safety performance of the battery cell 20.

It should be noted that in the embodiment shown in FIG. 7, the two electrode terminals 214 being respectively disposed at the ends on two sides of the battery cell 20 in the length direction L is used as an example for description. In an alternative, the two electrode terminals 214 may be disposed at an end on a same side of the battery cell 20 in the length direction L. In this case, for the technical solutions related to the pressure relief mechanism 213, reference may still be made to the related descriptions in the embodiment shown in FIG. 7 above, and details are not repeated herein.

It should also be noted that in the embodiments shown in FIG. 6 and FIG. 7, the shape of the battery cell 20 being the shape of the battery cell 20 shown in (b) of FIG. 5 is used as an example for description. In an alternative, the shape of the battery cell 20 in FIG. 6 and FIG. 7 may be the shape of the battery cell 20 shown in (a) of FIG. 5. For the technical solutions related to the electrode terminal 214 and the pressure relief mechanism 213, reference may be made to the related descriptions in the foregoing embodiments, and details are not repeated herein either.

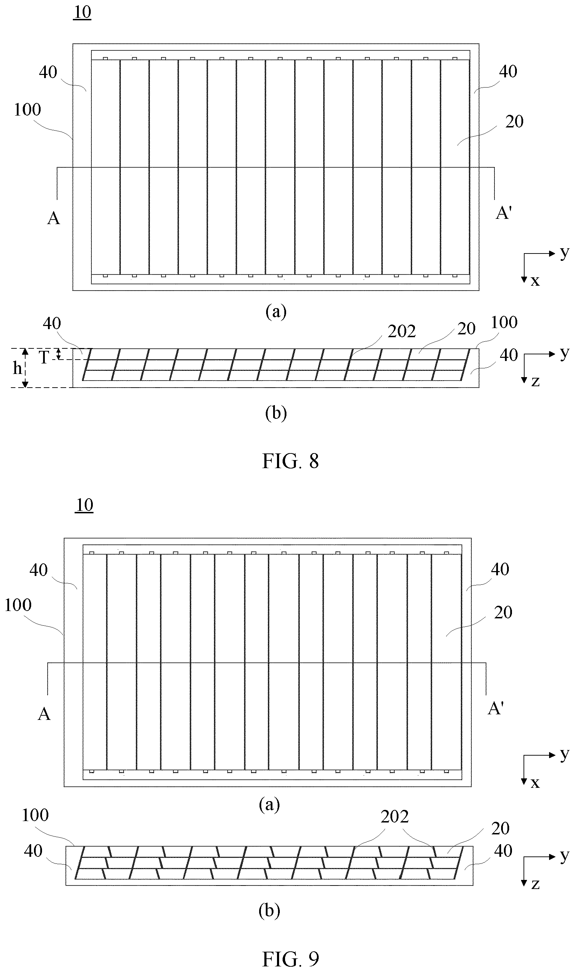

The battery cell 20 in the embodiments of this application is described above with reference to FIG. 5 to FIG. 7, and the arrangement of the plurality of columns of battery cells 20 formed by a plurality of battery cells 20 in the box 100 of the battery 10 in the embodiments of this application is described below with reference to FIG. 8 to FIG. 15.

FIG. 8 is a schematic top and cross-sectional view of a battery 10 according to an embodiment of this application. (a) of FIG. 8 is a schematic top view of the battery 10, and (b) of FIG. 8 is a schematic cross-sectional view along direction A-A' in (a).

In an example, a shape of a battery cell 20 in FIG. 8 may be the same as that of the battery cell 20 shown in (a) of FIG. 5.

As shown in (b) of FIG. 8, a plurality of battery cells 20 are stacked along a first direction z to form a column of battery cells 20. As shown in (a) and (b) of FIG. 8, a plurality of columns of battery cells 20 are arranged along a second direction y to form a row of battery cells 20. Optionally, as described in the foregoing embodiments, the first direction z is parallel to a thickness direction of the battery cell 20, and the second direction y may be perpendicular to a thickness direction T of the plurality of battery cells 20.

In an example, as shown in (a) of FIG. 8, two electrode terminals 214 of the battery cell 20 are respectively disposed on two end surfaces of the battery cell 20 in a length direction L of the battery cell 20. Or in an alternative, the two electrode terminals 214 of the battery cell 20 may be disposed on a same end surface of the battery cell 20 in the length direction L of the battery cell 20. In addition, a pressure relief mechanism 213 and other components of the battery cell 20 are not shown in FIG. 8. For the technical solutions related to the pressure relief mechanism 213 and other components, reference may be made to the related descriptions above and in the related technologies, and details are not repeated herein.

As shown in (b) of FIG. 8, in the second direction y, the plurality of columns of battery cells 20 are sequentially attached to each other via second walls (202) thereof to form a row of battery cells 20 adjacent to each other. In two adjacent columns of battery cells 20, two adjacent second walls 202 are parallel to each other, so that the second walls 202 between the two columns of battery cells 20 can be attached to each other, so as to form interaction forces between the two second walls 202 attached to each other.

In an example, as shown in (b) of FIG. 8, in the battery 10, the plurality of battery cells 20 have parallelogram cross sections on a plane (that is, the yz plane shown in the figure) perpendicular to first walls 201 and the second walls 202, that is, the second walls 202 of the plurality of battery cells 20 in the battery 10 are parallel to each other. Optionally, in each column of battery cells 20, the plurality of second walls 202 on a same side of the plurality of battery cells 20 can be on a same plane, that is, two oblique walls parallel to each other can be formed on two sides of each column of battery cells 20, which can more easily implement mounting and connection between the plurality of columns of battery cells 20, thus simplifying a manner of mounting the plurality of battery cells 20 in the box 100 and improving the production efficiency of the battery 10.

FIG. 9 is a schematic top and cross-sectional view of a battery 10 according to an embodiment of this application. (a) of FIG. 9 is a schematic top view of the battery 10, and (b) of FIG. 9 shows several cross-sectional views along direction A-A' in (a).

As shown in FIG. 9, the arrangement of the plurality of battery cells 20 in this embodiment of this application may be the same as that of the plurality of battery cells 20 shown in FIG. 8 except that as shown in (b) of FIG. 9, in the battery 10 in this embodiment of this application, the plurality of battery cells 20 have trapezoid cross sections on the plane (that is, the yz plane shown in the figure) perpendicular to first walls 201 and the second walls 202.

In this embodiment of this application, two second walls 202 of each battery cell 20 of the battery 10 are unparallel to each other, while two adjacent second walls 202 of two adjacent battery cells 20 in the second direction y are parallel to each other, so that the two adjacent columns of battery cells 20 in the second direction y can be sequentially attached to each other via the second walls 202, which can also implement mutual connection between the plurality of columns of battery cells 20.

Optionally, as shown in (b) of FIG. 9, in each column of battery cells 20 of the battery 10, the plurality of second walls 202, on one side, of the plurality of battery cells 20 can be on a same plane, while the plurality of second walls 202 on the other side are parallel to each other but on different planes. When two adjacent columns of battery cells 20 are spliced with each other, the two columns of battery cells 20 have a parallelogram cross section on the yz plane.

According to this implementation, in each column of battery cells 20 of the battery 10, the plurality of second walls 202, on one side, of the plurality of battery cells 20 can be on a same plane. Therefore, when two adjacent columns of battery cells 20 are spliced with each other, two oblique walls parallel to each other can be formed on two sides of the entire two columns of battery cells 20, which can also more easily implement connection between the plurality of columns of battery cells 20, thus improving the production efficiency of the battery 10.

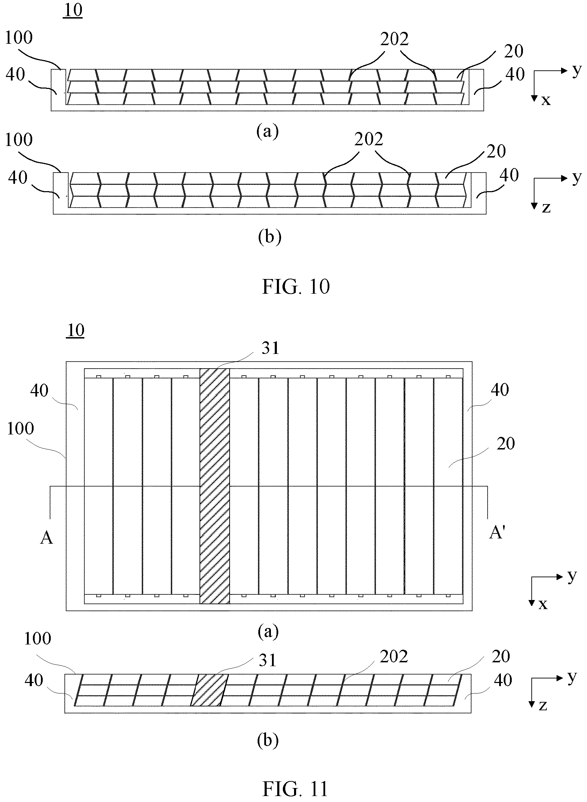

Optionally, FIG. 10 shows two other schematic cross-sectional views of the battery 10 shown in (a) of FIG. 9 along direction A-A'.

As shown in (a) of FIG. 10, in each column of battery cells 20 of the battery 10, the plurality of second walls 202 on a same side of the plurality of battery cells 20 are parallel to each other but on different planes.

As shown in (b) of FIG. 10, in each column of battery cells 20 of the battery 10, the plurality of second walls 202 on a same side of the plurality of battery cells 20 are unparallel to each other and on different planes.

According to the implementations of this embodiment shown in (a) and (b) of FIG. 10 above, each column of battery cells 20 can also be stacked along the first direction z, and the plurality of columns of battery cells 20 can be attached to each other along the second direction y.

Optionally, in some implementations, the battery 10 includes N columns of battery cells 20, and each column of battery cells 20 in the N columns of battery cells may include M battery cells 20, where M and N are positive integers greater than 1, and N is greater than or equal to M.

In an example, in the embodiment shown in FIG. 8 above, the battery 10 includes 13 columns of battery cells 20, and each column of battery cells 20 includes 3 battery cells 20. In the embodiments shown in FIG. 9 and FIG. 10, the battery 10 includes 14 columns of battery cells 20, and each column of battery cells 20 includes 3 battery cells 20.

According to the technical solution in these implementations, in the battery 10, fewer battery cells 20 are stacked along the first direction z, and more battery cells 20 are arranged along the second direction y. On one hand, in the gravity direction parallel to the first direction z, the overall size of the battery 10 is smaller, and in the horizontal direction parallel to the second direction y, the overall size of the battery 10 is larger, facilitating stable mounting of the battery 10 in an electric apparatus. On the other hand, each column of battery cells 20 are stacked along the first direction z via the first walls 201 having a larger area, and two adjacent columns of battery cells 20 are connected to each other in the second direction y via the second walls 202 having a smaller area, so that most of the heat generated by the battery cells 20 is transferred among each column of battery cells 20 through the first walls 201 having a larger area, while less amount of the heat is transferred to other columns of battery cells 20 through the second walls 202. Therefore, in the case that fewer battery cells 20 are present in each column of battery cells 20, if a battery cell 20 in the battery 10 experiences thermal runaway, the battery cell 20 only affects other battery cells 20 in the column in which the battery cell 20 is located, and has less effect on battery cells 20 in other columns, thereby improving overall safety performance of the battery 10.

For disposition of the plurality of columns of battery cells 20 in the box 100 in FIG. 8 to FIG. 10, it can be understood that the overall size of the plurality of columns of battery cells 20 can be adapted to the size of a hollow cavity in the box 100. In the following description, the size of the hollow cavity in the box 100 is also simply referred to as the size of the box 100.

In the first direction z, the overall size of each column of battery cells 20 is a sum of the sizes of the plurality of battery cells 20 in each column. As an example rather than a limitation, as shown in (b) of FIG. 8, a size T of a single battery cell 20 in the first direction z and a size h of the box 100 in the first direction z are in a relation satisfying h = n * T + c, where c is a preset value, and n is the quantity of battery cells 20 in the first direction z. Optionally, 0 mm < c ≤ 50 mm, and/or 0 < n ≤ 6. Further, 15 mm ≤ c ≤ 25 mm, and/or 2 ≤ n ≤ 4.

In this way, in the first direction z, the size of the box 100 may be slightly larger than that of each column of battery cells 20, which facilitates mounting of the plurality of columns of battery cells 20 arranged along the second direction y in the box 100 and takes into account the overall volume and energy density of the battery 10. Similarly, in another direction, for example, in the second direction y and the third direction z, the size of the box 100 may also be slightly larger than the overall size of the plurality of columns of battery cells 20.

Optionally, in some implementations, a length direction of the box 100 may be parallel to the second direction y, so that as many columns of battery cells 20 as possible are arranged along the length direction of the box 100. Or in other implementations, the length direction of the box 100 may alternatively be perpendicular to the second direction y and parallel to the third direction x.

It can be understood that in this embodiment of this application, the specific size and shape of the box 100 can be correspondingly designed according to the overall size of the plurality of columns of battery cells 20 therein. This is not specifically limited in this embodiment of this application.

In the embodiments shown in FIG. 8 to FIG. 10 above, the plurality of columns of battery cells 20 are sequentially attached to each other via the second walls 202 thereof to form an entirety and be mounted in the box 100, and no other spacer is provided between the plurality of battery cells 20, so that energy density and overall quality of the battery 10 can be improved, optimizing overall performance of the battery 10.

In addition to the embodiments shown in FIG. 8 to FIG. 10 above, optionally, a first spacer 31 may further be provided between the plurality of columns of battery cells 20.

On the basis of the embodiment of this application shown in FIG. 8, FIG. 11 is another schematic top and cross-sectional view of a battery 10 according to an embodiment of this application. (a) of FIG. 11 is a schematic top view of the battery 10, and (b) of FIG. 11 is a schematic cross-sectional view along direction A-A' in (a).

As shown in (a) and (b) of FIG. 11, the battery 10 may further include a first spacer 31 disposed between the plurality of columns of battery cells 20, where the first spacer 31 has walls oblique to the first direction z so as to be attached to the second walls 202 of two columns of battery cells 20 adjacent to the first spacer 31. The first spacer 31 may be at least one of the following structures: a cross beam, a thermal management component, and a structural adhesive.

In an example, as shown in (b) of FIG. 11, the plurality of battery cells 20 in the battery 10 have parallelogram cross sections on the yz plane, and each column of battery cells 20 also have parallelogram cross sections on the yz plane. The first spacer 31 also has a parallelogram cross section on the yz plane, and the first spacer 31 has two opposite walls oblique to the first direction z so as to be attached to the second walls 202 of the two columns of battery cells 20 adjacent thereto.

In addition, as shown in (a) of FIG. 11, the first spacer 31 may also extend along a length direction L (that is, the third direction x) of the battery cell 20, and the length of the first spacer 31 may be greater than or equal to that of the battery cell 20, so that the first spacer 31 can sufficiently space apart two adjacent columns of battery cells 20. In an example, two ends of the first spacer 31 in its length direction may separately abut against the box 100 to enhance stability of the first spacer 31 in the box 100, thereby enhancing stability of the battery cells 20 attached to the first spacer 31 in the box 100.

As in an example, if the first spacer 31 is a cross beam, the first spacer 31 may have enough stiffness and strength and is provided between the plurality of columns of battery cells 20. On one hand, the overall stiffness and strength of the battery 10 can be enhanced, improving the overall impact resistance of the battery 10. On the other hand, the first spacer 31 can also support the second walls 202 of the battery cells 20, avoiding continuous accumulation of stress of the plurality of columns of battery cells 20 in an arrangement direction thereof in case of swelling of the battery cells 20, enhancing strength and stiffness of the plurality of columns of battery cells 20 in the arrangement direction thereof, and improving overall stability and safety of the battery 10. On the third hand, the first spacer 31 can further block heat transfer. When a battery cell 20 located on one side of the first spacer 31 experiences thermal runaway, a large amount of heat generated by this battery cell is blocked by the first spacer 31 to some extent, thereby preventing the heat from being transferred to a battery cell 20 located on the other side of the first spacer 31, guaranteeing normal operation of the battery cell 20 located on the other side of the first spacer 31, and improving the overall safety of the battery 10.

In addition to being a cross beam, the first spacer 31 may alternatively be a thermal management component, for example, a cooling component such as a cooling plate. This thermal management component has a thermal management function for the battery cells 20 in addition to having enough stiffness and strength, and can regulate the temperatures of the battery cells 20, further guaranteeing working performance and safety performance of the battery 10.

In other alternative implementations, the first spacer 31 may alternatively be a structural adhesive with specified thickness or another type of component, so long as the first spacer 31 can space apart two adjacent columns of battery cells 20 and have enough stiffness and strength to support the second walls 202 of the battery cells 20. The specific structure of the first spacer 31 is not limited in this embodiment of this application.

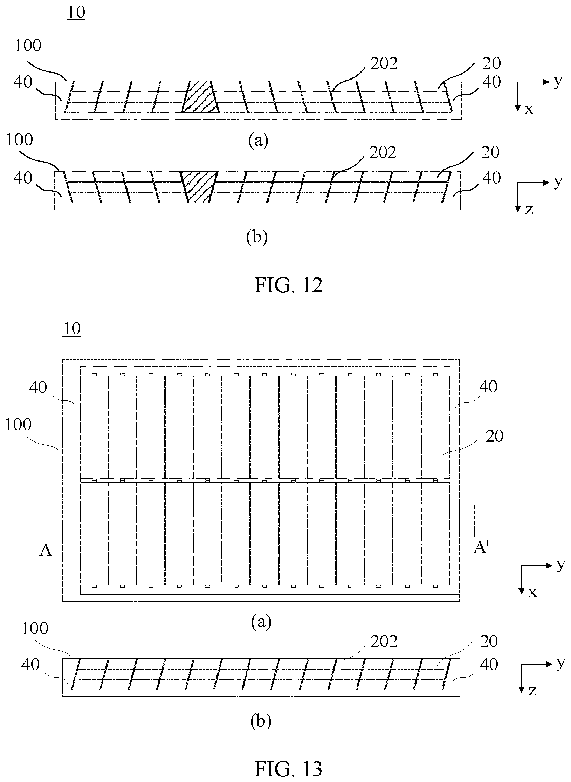

FIG. 12 shows two cross-sectional views of a battery 10 according to an embodiment of this application. (a) and (b) of FIG. 12 are two schematic cross-sectional views along direction A-A' in (a) of FIG. 11.

As shown in (a) and (b) of FIG. 12, the first spacer 31 has a trapezoid cross section on the yz plane.

In this embodiment of this application, second walls 202 of two columns of battery cells 20 located on two sides of the first spacer 31 are located on a same plane and unparallel to each other. Optionally, an included angle between a second wall 202 of one column of battery cells 20 located on one side of the first spacer 31 and the first direction z may be θ1, and an included angle between a second wall 202 of the other column of battery cells 20 located on the other side of the first spacer 31 and the first direction z may be θ2. For ranges of θ1 and θ2, reference may be made to the related descriptions of the range of θ above.

Optionally, as shown in (a) and (b) of FIG. 10, a first group of battery cells 20 located on one side of the first spacer 31 are attached to each other via the first walls 201 and second walls 202 thereof. Similarly, a second group of battery cells 20 located on the other side of the first spacer 31 are also attached to each other via the first walls 201 and second walls 202 thereof. The second walls 202 of the first group of battery cells 20 and the second walls 202 of the second group of battery cells 20 may be symmetrical with respect to the first direction z.

In this case, when a plurality of battery cells 20 swell, stress generated in an arrangement direction (the second direction y) of the first group of battery cells 20 can partially offset or be partially offset by stress generated in an arrangement direction (the second direction y) of the second group of battery cells 20, thereby further enhancing the overall stiffness and strength of the battery 10, improving the stability of the battery 10, and guaranteeing the safety performance of the battery 10.

In the embodiments shown in FIG. 11 and FIG. 12 above, the battery 10 including one first spacer 31 is merely used as an example for description. Optionally, the battery 10 may include a plurality of first spacers 31, where the plurality of first spacers 31 may be respectively disposed at different positions in the plurality of columns of battery cells 20.

As an example rather than a limitation, the first spacer 31 may be provided in a quantity of less than or equal to 5. Further, the first spacer 31 may be provided in a quantity of 1 to 3 to balance the overall strength and energy density of the battery 10.

In addition, to guarantee mounting stability of a plurality of battery cells 20 in the box 100, optionally, as shown in FIG. 8 to FIG. 12, the plurality of columns of battery cells 20 are arranged along the second direction y to form a row of battery cells 20, and the battery 10 may further include an end plate 40 disposed on at least one end of the row of battery cells 20 in the second direction y. The end plate 40 may have a wall oblique to the first direction z so as to be adapted to the second wall of the battery cell 20, where the oblique wall is configured to be attached to the second wall 202 of the battery cell 20. Optionally, in some implementations, the end plate 40 may be a side wall of the box 100 in the second direction y.

Specifically, as shown in (a)s of FIG. 8, FIG. 9, and FIG. 11, the end plate 40 is provided at each of two ends of a row of battery cells 20 so as to fasten and constrain the row of battery cells 20 in the second direction y. In addition, the end plates 40 are further configured to support the second walls 202 located on two sides of the row of battery cells 20 and having a larger area, and bear stress on the second walls 202 caused by swelling of the battery cells 20. Optionally, the end plate 40 may extend along the length direction L (that is, the third direction x in the figures) of the first battery cells 20 to be fully attached to the battery cells 20 and to support the battery cells 20.

As shown in (b)s of FIG. 8, FIG. 9, and FIG. 11 and FIG. 12, the end plate 40 may have a right trapezoid cross section on the yz plane, where one end surface of the end plate 40 is configured to be adapted to the oblique second walls 202 of the battery cells 20, and other end surfaces are parallel or perpendicular to the horizontal plane, so that the end plate 40 can be better adapted to and mounted in the box 100 of a regular shape such as a hollow rectangular structure, and the mounting stability of the end plate 40 and the battery cells 20 attached thereto in the box 100. In addition, a local region of the end plate 40 of such structure has a larger thickness in the second direction y, and thus the local region has higher stiffness and strength in the second direction y, enhancing the overall stiffness, strength, and stability of the battery 10.

Optionally, thickness of the end plate 40 at an end facing the direction of gravity is greater than thickness of the end plate 40 at an end facing away from the direction of gravity. In an example, as shown in (b) of FIG. 12, the battery 10 may include two end plates 40, where thickness of each end plate 40 in the two end plates 40 at an end facing the direction of gravity is greater than thickness at an end thereof facing away from the direction of gravity, that is, each end plate 40 has a larger thickness at the end facing the direction of gravity, which can ensure that the battery 10 has higher rigidity, strength and stability at an end facing the direction of gravity. When the battery 10 is mounted at a chassis of a vehicle, the battery 10 can better resist external impact such as flying stones from the bottom of the vehicle, improving the mounting stability of the battery 10 in the vehicle and ensuring the operation performance of the battery 10.

The end plate 40 may also be, for example, a conventional rectangular plate structure or other structures shown in FIG. 10 in addition to the shapes shown in FIG. 8, FIG. 9, FIG. 11, and FIG. 12, and a gap between the end plate 40 and the battery cells 20 may be filled by a structural adhesive or other related components.

In the embodiments shown in FIG. 8 to FIG. 12 above, the plurality of columns of battery cells 20 are arranged along the second direction y to form a row of battery cells 20, in other words, the battery 10 may include a row of battery cells 20 formed by the plurality of columns of battery cells 20. Optionally, the battery 10 may alternatively include a plurality of rows of battery cells 20.

FIG. 13 is another schematic top and cross-sectional view of a battery 10 according to an embodiment of this application. (a) of FIG. 13 is a schematic top view of the battery 10, and (b) of FIG. 13 is a schematic cross-sectional view along direction A-A' in (a).

As shown in (a) of FIG. 13, in this embodiment of this application, the battery 10 may include two rows of battery cells 20, and each row of battery cells 20 in the two rows of battery cells 20 are formed by a plurality of columns of battery cells 20 arranged along the second direction y. Two electrode terminals 214 of each battery cell 20 may be respectively disposed on two end surfaces of the battery cell 20 in a length direction L (the third direction x) of the battery cell 20. Electrode terminals 214 between the two rows of battery cells 20 may be electrically connected to each other to implement electric energy transfer of the two rows of battery cells 20.

Optionally, (b) of FIG. 13 only schematically shows a cross-sectional view of the battery 10 according to the embodiments of this application, that is, a plurality of battery cells 20 have parallelogram cross sections. Optionally, the plurality of battery cells 20 may alternatively have trapezoid cross sections.

In addition, it should be noted that a schematic view of the first spacer 31 described above is not shown in FIG. 13. The first spacer 31 may be provided in at least one of the two rows of battery cells 20. Specifically, for provision manner of the first spacer 31 in each row of battery cells 20, reference may be made to the related descriptions in the foregoing embodiments, and details are not repeated herein. It can be understood that if the first spacer 31 is provided in both of the two rows of battery cells 20, the first spacers 31 in the upper and lower rows may be connected to form an integrated structure, thereby increasing stiffness and strength of the first spacer 31.

It should also be noted that, in addition to that the electrode terminals 214 of the battery cell 20 may be respectively disposed on two end surfaces of the battery cell 20 in the length direction L (the third direction x) of the battery cell 20 as shown in FIG. 13, in other examples, the two electrode terminals 214 of the battery cell 20 may alternatively be disposed on a same end surface of the battery cell 20 along the length direction L (the third direction x) of the battery cell 20. For example, in the embodiment shown in (a) of FIG. 13, the two electrode terminals 214 of the battery cell 20 in the upper row are both disposed on the upper side of the battery cell 20, while the two electrode terminals 214 of the battery cell 20 in the lower row are both disposed on the lower side of the battery cell 20.

In a case that the battery 10 includes a plurality of rows of battery cells 20, a second spacer 32 may be provided between two adjacent rows of battery cells 20, where the second spacer 32 is at least one of the following structures: a cross beam, a thermal management component, and a structural adhesive.

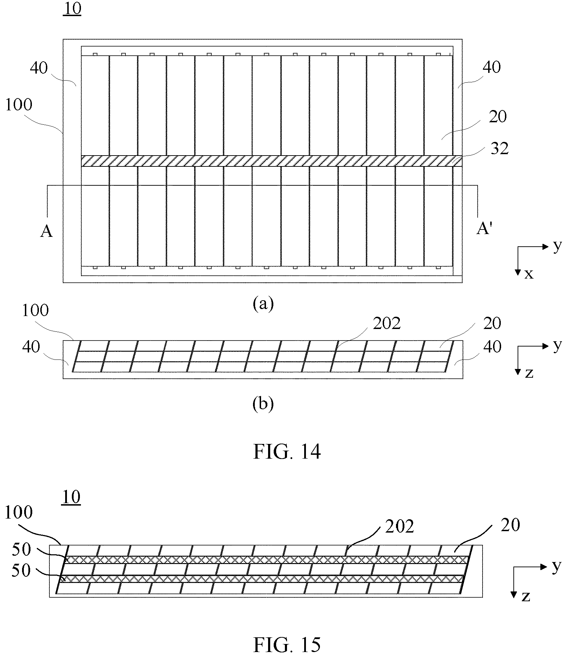

FIG. 14 is another schematic top and cross-sectional view of a battery 10 according to an embodiment of this application. (a) of FIG. 14 is a schematic top view of the battery 10, and (b) of FIG. 14 is a schematic cross-sectional view along direction A-A' in (a).

As shown in FIG. 14, the battery 10 further includes a second spacer 32 disposed between two rows of battery cells 20, where the second spacer 32 may extend along an arrangement direction (that is, the second direction y) of a row of battery cells 20 and may have a length greater than or equal to the overall length of the row of battery cells 20 such that the second spacer 32 can sufficiently space apart the two adjacent rows of battery cells 20. In an example, two ends of the second spacer 32 in its length direction may separately abut against the box 100 to enhance stability of the second spacer 32 in the box 100, thereby enhancing stability of the battery cells 20 attached to the second spacer 32 in the box 100.

It can be understood that the size of the second spacer 32 in the first direction z may alternatively be the same as the size of each row of battery cells 20 in the first direction z. In this case, in the two adjacent rows of battery cells 20, the third wall 203 on one side of each column of battery cells 20 can abut against the second spacer 32, and the third wall 203 on the other side thereof can be provided with the electrode terminal 214 of the battery cell 20, so that the second spacer 32 can sufficiently support the two rows of battery cells 20 without affecting disposition of other related components such as the electrode terminal 214 and busbar in the two rows of battery cells 20.

As in an example, if the second spacer 32 is a cross beam, the second spacer 32 may have enough stiffness and strength. Disposing the second spacer 32 between two adjacent rows of battery cells 20 can enhance the overall stiffness and strength of the battery 10 and improve the overall impact resistance of the battery 10. In addition, if the second spacer 32 is a thermal management component, for example, a cooling component such as a cooling plate, this thermal management component has a thermal management function for the battery cells 20 in addition to having enough stiffness and strength, and can regulate the temperatures of the battery cells 20, further guaranteeing working performance and safety performance of the battery 10. In other alternative implementations, the second spacer 32 may alternatively be a structural adhesive with specified thickness or another type of component, so long as the second spacer 32 can space apart two adjacent rows of battery cells 20. The specific structure of the second spacer 32 is not limited in this embodiment of this application.

Optionally, the battery 10 may further include thermal management components 50 corresponding to walls other than the second walls 202 of the plurality of columns of battery cells 20 for thermal management of the plurality of columns of battery cells 20.

Specifically, the thermal management component 50 may be configured to accommodate fluid to regulate temperatures of the battery cells 20. The fluid herein may be liquid or gas. Regulating temperatures refers to heating or cooling the battery cells 20. In a case of cooling or lowering the temperatures of the battery cells 20, the thermal management component 50 is configured to accommodate cooling fluid to lower the temperatures of the battery cells 20. In this case, the thermal management component 50 may also be called a cooling component, a cooling system, a cooling plate, or the like, and the fluid accommodated therein may also be called a cooling medium or cooling fluid, and more specifically, may be called cooling liquid or cooling gas. In addition, the thermal management component 50 may further be configured to heat and rise the temperatures of the battery cells 20. This is not limited in this embodiment of this application. Optionally, the fluid may be circulated to achieve a better temperature regulation effect. Optionally, the fluid may be water, a mixture of water and ethylene glycol, air, or the like.

Optionally, in this embodiment of this application, the thermal management components 50 may correspond to the first walls 201 or third walls 203 of the plurality of columns of battery cells 20 for thermal management of each battery cell 20 in the plurality of columns of battery cells 20. The first wall 201 has a larger area, and the thermal management components 50 may be disposed corresponding to the first walls 201 of the plurality of columns of battery cells 20, so as to enhance the temperature management of the thermal management components 50 on the battery cells 20.

FIG. 15 is another schematic cross-sectional view of a battery 10 according to an embodiment of this application.

As shown in FIG. 15, in some possible implementations, the thermal management component 50 may be disposed between two adjacent battery cells 20 in each column of battery cells 20 to correspond to the first walls 201 of the two adjacent battery cells 20, facilitating better temperature management.

It can be understood that when the plurality of columns of battery cells 20 are arranged along the second direction y, the plurality of columns of battery cells 20 may also be regarded as a plurality of layers of battery cells 20 stacked along the first direction z. As an example rather than a limitation, the thermal management component 50 may be a cooling plate, which may be disposed between two adjacent layers of battery cells 20 in the plurality of layers of battery cells 20 and cool the two adjacent layers of battery cells 20 via the first walls 201 having a larger area to improve the safety performance of the battery 10.

An embodiment of this application further provides an electric apparatus, where the electric apparatus may include the battery 10 in the foregoing embodiments, and the battery 10 is configured to supply electric energy to the electric apparatus.

Optionally, the electric apparatus may be a vehicle 1, a ship, or a spacecraft.

The foregoing describes the battery 10 and the electric apparatus in the embodiments of this application; and the following describes a method and device for manufacturing battery in the embodiments of this application. For those not described in detail, refer to the foregoing embodiments.

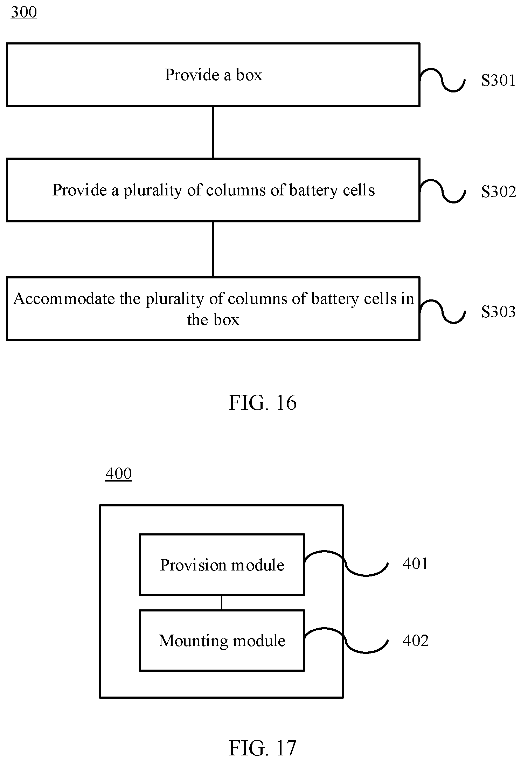

FIG. 16 is a schematic flowchart of a method 300 for manufacturing battery according to an embodiment of this application. As shown in FIG. 16, the method 300 may include the following steps.

S301. Provide a box 100.

S302. Provide a plurality of columns of battery cells 20. The battery cell 20 is a polyhedral structure and includes a first wall 201 and a second wall 202 connected to each other, the first wall 201 being a wall with a largest area of the battery cell 20 and perpendicular to a first direction z, the second wall 202 being oblique to the first direction z, and the first direction z being parallel to the direction of gravity. Each column of battery cells 20 in the plurality of columns of battery cells 20 are stacked along the first direction z, and in each column of battery cells 20, adjacent ones of the battery cells 20 are attached to each other via the first wall 201. The plurality of columns of battery cells 20 are arranged along a second direction y perpendicular to the first direction z, and two adjacent columns of battery cells 20 are attached to each other via the second wall 202.

S303. Accommodate the plurality of columns of battery cells 20 in the box 100.

FIG. 17 is a schematic block diagram of an apparatus 400 for manufacturing battery according to an embodiment of this application. As shown in FIG. 17, the apparatus 400 for manufacturing battery may include a provision module 401 and a mounting module 402.

The provision module 401 is configured to provide a box 100 and provide a plurality of columns of battery cells 20. The battery cell 20 is a polyhedral structure and includes a first wall 201 and a second wall 202 connected to each other, the first wall 201 being a wall with a largest area of the battery cell 20 and perpendicular to a first direction z, the second wall 202 being oblique to the first direction z, and the first direction z being parallel to the direction of gravity. Each column of battery cells 20 in the plurality of columns of battery cells 20 are stacked along the first direction z, and in each column of battery cells 20, adjacent ones of the battery cells 20 are attached to each other via the first wall 201. The plurality of columns of battery cells 20 are arranged along a second direction y perpendicular to the first direction z, and two adjacent columns of battery cells 20 are attached to each other via the second wall 202.

The mounting module 402 is configured to accommodate the plurality of columns of battery cells 20 in the box 100.

Although this application has been described with reference to the preferred embodiments, various modifications to this application can be made. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A battery (10) comprising:
a box (100); and
a plurality of columns of battery cells (20) accommodated in the box (100), wherein the battery cell (20) is a polyhedral structure and comprises a first wall (201) and a second wall (202) connected to each other, the first wall (201) being a wall with a largest area of the battery cell (20) and perpendicular to a first direction (z), the second wall (202) being oblique to the first direction (z), and the first direction (z) being parallel to the direction of gravity; wherein
each column of battery cells (20) in the plurality of columns of battery cells (20) are stacked along the first direction (z), and in each column of battery cells (20), adjacent ones of the battery cells (20) are attached to each other via the first wall (201); and the plurality of columns of battery cells (20) are arranged along a second direction (y) perpendicular to the first direction (z), and two adjacent columns of battery cells (20) are attached to each other via the second wall (202);
the battery cell (20) comprises two first walls (201) parallel to each other and two second walls (202) parallel to each other, **characterized in that** the battery cell (20) has a parallelogram cross section on a plane perpendicular to the first walls (201) and the second walls (202).

2. The battery (10) according to claim 1, **characterized in that** in each column of battery cells (20), a plurality of second walls (202), on a same side, of a plurality of battery cells (20) are on a same plane.

3. The battery (10) according to any one of claims 1 to 2, **characterized in that** the first wall (201) and the second wall (202) extend along a length direction (L) of the battery cell (20), and the length direction (L) of the battery cell (20) is perpendicular to the first direction (z) and the second direction (y);
and/or
**characterized in that** each column of battery cells (20) are stacked along a thickness direction (T) of the battery cells (20), and the thickness direction (T) of the battery cells (20) is parallel to the first direction (z);
and/or
**characterized in that** the battery cell (20) further comprises a third wall (203) located at an end of the battery cell (20) in the length direction (L) and connected to the first wall (201) and the second wall (202); and
the battery cell (20) further comprises an electrode terminal (214) disposed on the third wall (203); and preferably,
wherein that the battery cell (20) further comprises a pressure relief mechanism (213) disposed on the third wall (203) or the first wall (201).

4. The battery (10) according to any one of claims 1 to 3, **characterized in that** the plurality of columns of battery cells (20) are sequentially attached to each other via the second walls (202) to form an entirety.

5. The battery (10) according to any one of claims 1 to 4, **characterized in that** a first spacer (31) is provided between the plurality of columns of battery cells (20); and
the first spacer (31) has walls oblique to the first direction (z) so as to be attached to the second walls (202) of two columns of battery cells (20) adjacent to the first spacer (31), wherein the first spacer (31) is at least one of the following structures: a cross beam, a thermal management component, and a structural adhesive.

6. The battery (10) according to claim 5, **characterized in that** the first spacer (31) has a parallelogram or trapezoid cross section on the plane perpendicular to the first walls (201) and the second walls (202);
and/or
**characterized in that** the first spacer (31) is provided in a quantity of less than or equal to 5.

7. The battery (10) according to any one of claims 1 to 6, **characterized in that** the plurality of columns of battery cells (20) are arranged along the second direction (y) to form a row of battery cells (20); and
the battery (10) further comprises an end plate (40) disposed on at least one end of the row of battery cells (20) in the second direction (y), wherein the end plate (40) has a wall oblique to the first direction (z), and the oblique wall is configured to be attached to the second wall (202) of the battery cell (20).

8. The battery (10) according to claim 7, **characterized in that** thickness of the end plate (40) at an end facing the direction of gravity is greater than thickness of the end plate (40) at an end facing away from the direction of gravity.

9. The battery (10) according to any one of claims 1 to 8, **characterized in that** the plurality of columns of battery cells (20) are arranged along the second direction (y) to form a row of battery cells (20), and the battery (10) comprises a plurality of rows of battery cells (20); and
a second spacer (32) is provided between two adjacent rows of battery cells (20) in the plurality of rows of battery cells (20), and the second spacer (32) is at least one of the following structures: a cross beam, a thermal management component, and a structural adhesive.

10. The battery (10) according to any one of claims 1 to 6, **characterized in that** the battery (10) further comprises thermal management components (50) corresponding to walls other than the second walls (202) of the plurality of columns of battery cells (20) for thermal management of the plurality of columns of battery cells (20).

11. The battery (10) according to claim 10, **characterized in that** the thermal management component (50) is disposed between two adjacent battery cells (20) in each column of battery cells (20).

12. An electric apparatus, **characterized by** comprising the battery (10) according to any one of claims 1 to 11, wherein the battery (10) is configured to supply electric energy to the electric apparatus.

## Patentansprüche

1. Batterie (10), die Folgendes umfasst:
einen Kasten (100); und
mehrere Spalten von Batteriezellen (20), die in dem Kasten (100) untergebracht sind, wobei die Batteriezelle (20) eine polyedrische Struktur ist und eine erste Wand (201) und eine zweite Wand (202) umfasst, die miteinander verbunden sind, wobei die erste Wand (201) eine Wand mit einer größten Fläche der Batteriezelle (20) und senkrecht zu einer ersten Richtung (z) ist, wobei die zweite Wand (202) schräg zu der ersten Richtung (z) ist, und wobei die erste Richtung (z) parallel zu der Schwerkraftrichtung ist; wobei
jede Spalte von Batteriezellen (20) in den mehreren Spalten von Batteriezellen (20) entlang der ersten Richtung (z) gestapelt ist und in jeder Spalte von Batteriezellen (20) angrenzende der Batteriezellen (20) über die erste Wand (201) aneinander befestigt sind; und die mehreren Spalten von Batteriezellen (20) entlang einer zweiten Richtung (y) senkrecht zu der ersten Richtung (z) angeordnet sind und zwei angrenzende Spalten von Batteriezellen (20) über die zweite Wand (202) aneinander befestigt sind;
die Batteriezelle (20) zwei zueinander parallele erste Wände (201) und zwei zueinander parallele zweite Wände (202) umfasst, **dadurch gekennzeichnet, dass**
die Batteriezelle (20) einen Parallelogrammquerschnitt auf einer Ebene senkrecht zu den ersten Wänden (201) und den zweiten Wänden (202) aufweist.

2. Batterie (10) nach Anspruch 1, **dadurch gekennzeichnet, dass** in jeder Spalte von Batteriezellen (20) mehrere zweite Wände (202) auf einer gleichen Seite mehrerer Batteriezellen (20) auf einer gleichen Ebene liegen.

3. Batterie (10) nach einem der Ansprüche 1 bis 2, **dadurch gekennzeichnet, dass** sich die erste Wand (201) und die zweite Wand (202) entlang einer Längsrichtung (L) der Batteriezelle (20) erstrecken und die Längsrichtung (L) der Batteriezelle (20) senkrecht zu der ersten Richtung (z) und der zweiten Richtung (y) ist;
und/oder
**dadurch gekennzeichnet, dass** jede Spalte von Batteriezellen (20) entlang einer Dickenrichtung (T) der Batteriezellen (20) gestapelt ist und die Dickenrichtung (T) der Batteriezellen (20) parallel zu der ersten Richtung (z) ist;
und/oder
**dadurch gekennzeichnet, dass** die Batteriezelle (20) ferner eine dritte Wand (203) umfasst, die sich an einem Ende der Batteriezelle (20) in der Längsrichtung (L) befindet und mit der ersten Wand (201) und der zweiten Wand (202) verbunden ist; und
wobei die Batteriezelle (20) ferner einen Elektrodenanschluss (214) umfasst, der an der dritten Wand (203) angeordnet ist; und wobei vorzugsweise
die Batteriezelle (20) ferner einen Druckentlastungsmechanismus (213) umfasst, der an der dritten Wand (203) oder der ersten Wand (201) angeordnet ist.

4. Batterie (10) nach einem der Ansprüche 1 bis 3, **dadurch gekennzeichnet, dass** die mehreren Spalten von Batteriezellen (20) sequentiell über die zweiten Wände (202) aneinander befestigt sind, um eine Gesamtheit zu bilden.

5. Batterie (10) nach einem der Ansprüche 1 bis 4, **dadurch gekennzeichnet, dass** ein erster Abstandshalter (31) zwischen den mehreren Spalten von Batteriezellen (20) bereitgestellt ist; und der erste Abstandshalter (31) Wände schräg zu der ersten Richtung (z) aufweist, um an den zweiten Wänden (202) von zwei Spalten von Batteriezellen (20) angrenzend an den ersten Abstandshalter (31) befestigt zu werden, wobei der erste Abstandshalter (31) mindestens eine der folgenden Strukturen ist: ein Querträger, eine Wärmeverwaltungskomponente und ein Strukturklebstoff.

6. Batterie (10) nach Anspruch 5, **dadurch gekennzeichnet, dass** der erste Abstandshalter (31) einen Parallelogramm- oder Trapezquerschnitt auf der Ebene senkrecht zu den ersten Wänden (201) und den zweiten Wänden (202) aufweist;
und/oder
**dadurch gekennzeichnet, dass** der erste Abstandshalter (31) in einer Quantität von 5 oder weniger bereitgestellt ist.

7. Batterie (10) nach einem der Ansprüche 1 bis 6, **dadurch gekennzeichnet, dass** die mehreren Spalten von Batteriezellen (20) entlang der zweiten Richtung (y) angeordnet sind, um eine Reihe von Batteriezellen (20) zu bilden; und
wobei die Batterie (10) ferner eine Endplatte (40) umfasst, die an mindestens einem Ende der Reihe von Batteriezellen (20) in der zweiten Richtung (y) angeordnet ist, wobei die Endplatte (40) eine Wand aufweist, die schräg zu der ersten Richtung (z) ist, und die schräge Wand dazu ausgelegt ist, an der zweiten Wand (202) der Batteriezelle (20) befestigt zu werden.

8. Batterie (10) nach Anspruch 7, **dadurch gekennzeichnet, dass** die Dicke der Endplatte (40) an einem in Schwerkraftrichtung zeigenden Ende größer ist als die Dicke der Endplatte (40) an einem von der Schwerkraftrichtung weg zeigenden Ende.

9. Batterie (10) nach einem der Ansprüche 1 bis 8, **dadurch gekennzeichnet, dass** die mehreren Spalten von Batteriezellen (20) entlang der zweiten Richtung (y) angeordnet sind, um eine Reihe von Batteriezellen (20) zu bilden, und die Batterie (10) mehrere Reihen von Batteriezellen (20) umfasst; und
wobei ein zweiter Abstandshalter (32) zwischen zwei angrenzenden Reihen von Batteriezellen (20) in den mehreren Reihen von Batteriezellen (20) bereitgestellt ist und der zweite Abstandshalter (32) mindestens eine der folgenden Strukturen ist: ein Querträger, eine Wärmeverwaltungskomponente und ein Strukturklebstoff.

10. Batterie (10) nach einem der Ansprüche 1 bis 6, **dadurch gekennzeichnet, dass** die Batterie (10) ferner Wärmeverwaltungskomponenten (50) umfasst, die anderen Wänden als den zweiten Wänden (202) der mehreren Spalten von Batteriezellen (20) entsprechen, zur Wärmeverwaltung der mehreren Spalten von Batteriezellen (20).

11. Batterie (10) nach Anspruch 10, **dadurch gekennzeichnet, dass** die Wärmeverwaltungskomponente (50) zwischen zwei angrenzenden Batteriezellen (20) in jeder Spalte von Batteriezellen (20) angeordnet ist.

12. Elektrische Einrichtung, **dadurch gekennzeichnet, dass** sie die Batterie (10) nach einem der Ansprüche 1 bis 11 umfasst, wobei die Batterie (10) dazu ausgelegt ist, Elektroenergie zur elektrischen Einrichtung zu liefern.

## Revendications

1. Batterie (10) comprenant :
un boîtier (100) ; et
une pluralité de colonnes de d'éléments de batterie (20) reçues dans le boîtier (100), dans laquelle l'élément de batterie (20) est une structure polyédrique et comprend une première paroi (201) et une deuxième paroi (202) reliées l'une à l'autre, la première paroi (201) étant une paroi de plus grande surface de l'élément de batterie (20) et perpendiculaire à une première direction (z), la deuxième paroi (202) étant oblique par rapport à la première direction (z), et la première direction (z) étant parallèle au sens de la gravité ; dans laquelle
chaque colonne d'éléments de batterie (20) de la pluralité de colonnes d'éléments de batterie (20) est empilée dans la première direction (z), et dans chaque colonne d'éléments de batterie (20), des éléments de batterie adjacents (20) sont fixés les uns aux autres par l'intermédiaire de la première paroi (201) ; et la pluralité de colonnes d'éléments de batterie (20) est agencée dans une seconde direction (y) perpendiculaire à la première direction (z), et deux colonnes adjacentes d'éléments de batterie (20) sont fixées l'une à l'autre par l'intermédiaire de la deuxième paroi (202) ;
l'élément de batterie (20) comprend deux premières parois (201) parallèles l'une à l'autre et deux deuxièmes parois (202) parallèles l'une à l'autre, **caractérisée en ce que**
l'élément de batterie (20) présente une coupe transversale en parallélogramme sur un plan perpendiculaire aux premières parois (201) et aux deuxièmes parois (202).

2. Batterie (10) selon la revendication 1, **caractérisée en ce que** dans chaque colonne d'éléments de batterie (20), une pluralité de deuxièmes parois (202), sur un même côté, d'une pluralité d'éléments de batterie (20) sont sur un même plan.

3. Batterie (10) selon l'une quelconque des revendications 1 à 2, **caractérisée en ce que** la première paroi (201) et la deuxième paroi (202) s'étendent dans le sens de la longueur (L) de l'élément de batterie (20), et le sens de la longueur (L) de l'élément de batterie (20) est perpendiculaire à la première direction (z) et à la seconde direction (y) ;
et/ou
**caractérisée en ce que** chaque colonne d'éléments de batterie (20) est empilée dans le sens de l'épaisseur (T) des éléments de batterie (20), et le sens de l'épaisseur (T) des éléments de batterie (20)est parallèle à la première direction (z) ;
et/ou
**caractérisée en ce que** l'élément de batterie (20) comprend en outre une troisième paroi (203) située à une extrémité de l'élément de batterie (20) dans le sens de la longueur (L) et reliée à la première paroi (201) et à la deuxième paroi (202) ; et
l'élément de batterie (20) comprend en outre une borne d'électrode (214) disposée sur la troisième paroi (203) ; et de préférence,
dans laquelle l'élément de batterie (20) comprend en outre un mécanisme limiteur de pression (213) disposé sur la troisième paroi (203) ou la première paroi (201).

4. Batterie (10) selon l'une quelconque des revendications 1 à 3, **caractérisée en ce que** la pluralité de colonnes d'éléments de batterie (20) sont fixées séquentiellement les unes aux autres par l'intermédiaire des deuxièmes parois (202) pour former un tout.

5. Batterie (10) selon l'une quelconque des revendications 1 à 4, **caractérisée en ce qu'**un premier séparateur (31) est placé entre la pluralité de colonnes d'éléments de batterie (20) ; et
le premier séparateur (31) présente des parois obliques par rapport à la première direction (z) de manière à être fixé aux deuxièmes parois (202) de deux colonnes d'éléments de batterie (20) adjacentes au premier séparateur (31), le premier séparateur (31) étant au moins l'une des structures suivantes : une traverse, un composant de gestion thermique et un adhésif structural.

6. Batterie (10) selon la revendication 5, **caractérisée en ce que** le premier séparateur (31) a une section transversale en forme de parallélogramme ou de trapèze dans le plan perpendiculaire aux premières parois (201) et aux deuxièmes parois (202) ;
et/ou
**caractérisée en ce que** le premier séparateur (31) est prévu en une quantité inférieure ou égale à 5.

7. Batterie (10) selon l'une quelconque des revendications 1 à 6, **caractérisée en ce que** la pluralité de colonnes d'éléments de batterie (20) sont agencées dans la seconde direction (y) pour former une rangée d'éléments de batterie (20) ; et
la batterie (10) comprend en outre une plaque d'extrémité (40) disposée sur au moins une extrémité de la rangée d'éléments de batterie (20) dans la seconde direction (y), la plaque d'extrémité (40) ayant une paroi oblique par rapport à la première direction (z), et la paroi oblique étant conçue pour être fixée à la deuxième paroi (202) de l'élément de batterie (20).

8. Batterie (10) selon la revendication 7, **caractérisée en ce que** l'épaisseur de la plaque d'extrémité (40) au niveau d'une extrémité tournée dans le sens de la gravité est supérieure à l'épaisseur de la plaque d'extrémité (40) au niveau d'une extrémité tournée à l'opposé du sens de la gravité.

9. Batterie (10) selon l'une quelconque des revendications 1 à 8, **caractérisée en ce que** la pluralité de colonnes d'éléments de batterie (20) sont agencées dans la seconde direction (y) pour former une rangée d'éléments de batterie (20), et la batterie (10) comprend une pluralité de rangées d'éléments de batterie (20) ; et
un second séparateur (32) est placé entre deux rangées adjacentes d'éléments de batterie (20) dans la pluralité de rangées d'éléments de batterie (20), et le second séparateur (32) est au moins l'une des structures suivantes : une traverse, un composant de gestion thermique et un adhésif structural.

10. Batterie (10) selon l'une quelconque des revendications 1 à 6, **caractérisée en ce que** la batterie (10) comprend en outre des composants de gestion thermique (50) correspondant à des parois autres que les deuxièmes parois (202) de la pluralité de colonnes d'éléments de batterie (20) pour la gestion thermique de la pluralité de colonnes d'éléments de batterie (20).

11. Batterie (10) selon la revendication 10, **caractérisée en ce que** le composant de gestion thermique (50) est disposé entre deux éléments de batterie adjacents (20) dans chaque colonne d'éléments de batterie (20).

12. Appareil électrique, **caractérisé en ce qu'**il comprend la batterie (10) selon l'une quelconque des revendications 1 à 11, dans lequel la batterie (10) est configurée pour fournir de l'énergie électrique à l'appareil électrique.
